# EUROPEAN PATENT APPLICATION

(11) **EP 2 508 926 A1**
(43) Date of publication of application: **10.10.2012**
(21) Application number: 10834613.1
(22) Date of filing: 02.12.2010
(51) Int. Cl.: G02B 6/44

(54) **OPTICAL FIBER CABLE**

(30) Priority: 02.12.2009 JP 2009275007
(71) Applicant: Fujikura, Ltd., Tokyo 135-8512 (JP)
(72) Inventor: SAITO, Kouji, Sakura-shi Chiba 285-8550 (JP); OKADA, Naoki, Sakura-shi Chiba 285-8550 (JP); YAMANAKA, Masayoshi, Sakura-shi Chiba 285-8550 (JP); FUKUTE, Takao, Sakura-shi Chiba 285-8550 (JP)
(74) Representative: Grünecker, Kinkeldey, Stockmair & Schwanhäusser
(86) International application number: PCT/JP2010/071591
(87) International publication number: WO 2011/068163

(57) **Abstract**

An Optical fiber cable includes: a slotted core 4 which houses and holds an optical fiber 1 in a rectilinear slotted groove 3 disposed along a longitudinal direction of the cable; a cylindrical sheath 6 covering the entire slotted core 4; a rectilinear hanger line 8 integrally provided continuously to the sheath 6; and a rectilinear tension member 7 mounted in the slotted core 4. The tension member 7 is located in a region having an angle about the cable center line within a predetermined value with respect to a plane including a center line of the suspension wire 8 and the cable center line.

## Description

### TECHNICAL FIELD

The present invention relates to an optical fiber cable in which an optical fiber is housed in a slotted core and the slotted core is covered with a sheath.

### BACKGROUND ART

An optical fiber cable generally includes a slotted core provided with a slotted groove to house an optical fiber inside, and a sheath to cover around the slotted core. Patent Document 1 describes an optical fiber cable including a slotted core provided with an SZ-twisted groove. The SZ-twisted groove is a groove which is spirally formed on an outer peripheral surface of the slotted core.

Meanwhile, as shown in Fig. 6, Patent document 2 and Patent Document 3 describe an optical fiber cable including a C-slotted core 103 provided with one slotted groove 102 to house an optical fiber 101 inside, and a sheath 104 to cover around the C-slotted core 103. The slotted groove 102 on the C-slotted core 103 is the groove which is rectilinearly formed with an opening on one side portion of the C-slotted core 103. This optical fiber cable adopts an eccentric sheath structure in which the thickness of the sheath 104 at a portion corresponding to the slotted groove 102 is made thicker than that in other portions.

In the C-slotted core 103, a tension member (a tensile body) 105 is inserted in a position opposite to the opening portion of the slotted groove 102. The tension member 105 is rectilinearly provided.

When the optical fiber cable including the aforementioned C-slotted core 103 is installed between telephone poles for example, a suspension wire is additionally used to support the optical fiber cable. Alternatively, a suspension wire (a spiral hanger) spirally wound around the optical fiber cable is used to support it.

### CITATION LIST

### PATENT LITERATURE

Patent Document 1: Japanese Patent Application Publication Laid-Open Publication No. 8-211261
Patent Document 2: Japanese Patent Application Publication Laid-Open Publication No. 2008-076897
Patent Document 3: Japanese Patent Application Publication Laid-Open Publication No. 2008-076898

### SUMMARY OF THE INVENTION

### TECHNICAL PROBLEM

It is complicated to use an additional suspension wire or to wind a suspension wire around the optical fiber cable as described above in the case of installing the optical fiber cable including the C-slotted core 103. It is also inconvenient when the optical fiber cable is replaced, for example.

By the way, as described in Patent Document 1, so-called a self-supporting-type optical fiber cable is proposed. Such a self-supporting type optical fiber cable includes a suspension wire integrally provided along the sheath 104 at a side portion thereof, and it has advantages that the cable can be easily installed between telephone poles not equipped with suspension wires and that the cable can be replaced easily.

However, a self-supporting type optical fiber cable provided with the above-described C-slotted core 103 is yet to be proposed. This is because the tension member 105 is inserted in one side of the C-slotted core 103 in the optical fiber cable provided with the C-slotted core 103, and thus the optical fiber cable possibly may not be bendable if the suspension wire is integrally provided along the sheath 104.

The present invention has been made in view of the above-mentioned circumstance and an object thereof is to provide an optical fiber cable including a C-slotted core, which is configured as a self-supporting type by a suspension wire integrally provided along a sheath.

### SOLUTION TO PROBLEM

An aspect of the present invention is An optical fiber cable comprising: an optical fiber; a slotted core including a rectilinear slotted groove disposed along a longitudinal direction of the cable and being configured to house and hold the optical fiber in the slotted groove; a cylindrical sheath configured to cover the entire slotted core inclusive of an opening portion of the slotted groove; a rectilinear suspension wire integrally provided along the sheath in the longitudinal direction of the cable; and a rectilinear tension member inserted in the slotted core along the longitudinal direction of the cable, wherein the tension member is provided in a region having an angle about a cable center line within a predetermined value with respect to a plane including a center line of the suspension wire and the cable center line.

The predetermined value may be ±30°.

The predetermined value may be ±20°.

A rectilinear thick portion may be formed in the sheath along the longitudinal direction of the cable, and the suspension wire is provided continuously to the sheath at the thick portion.

The suspension wire may be provided continuously to the sheath at a portion of the sheath corresponding to the opening portion of the slotted groove.

The tension member may be provided on an opposite side of the cable center line to the center line of the suspension wire in the plane including the center line of the suspension wire and the cable center line.

### ADVANTAGEOUS EFFECTS OF THE INVENTION

According to the present invention, it is possible to provide an optical fiber cable including a C-slotted core, which is configured as a self-supporting type by a suspension wire integrally provided along a sheath.

### BRIEF DESCRIPTION OF THE DRAWINGS

[Fig. 1] Fig. 1 is a cross-sectional view showing a configuration of an optical fiber cable according to an embodiment of the present invention.
[Fig. 2] Fig. 2 is a cross-sectional view showing a position of the center of a tension member in the optical fiber cable according to the embodiment of the present invention.
[Fig. 3] Fig. 3 is a cross-sectional view showing a configuration of an optical fiber cable in which the tension member is located in a region having an angle about a cable center line in excess of ±30° with respect to a Y-Z plane.
[Fig. 4] Fig. 4 is a perspective view showing procedures of a mid-span access operation with the optical fiber cable according to the embodiment of the present invention.
[Fig. 5] Fig. 5 is a cross-sectional view showing a configuration of an optical fiber cable in which a suspension wire is provided at a portion not corresponding to an opening portion of a slotted groove.
[Fig. 6] Fig. 6 is a cross-sectional view showing a configuration of a conventional optical fiber cable.

### DESCRIPTION OF EMBODIMENTS

An embodiment of the present invention will be described below in detail with reference to the drawings.

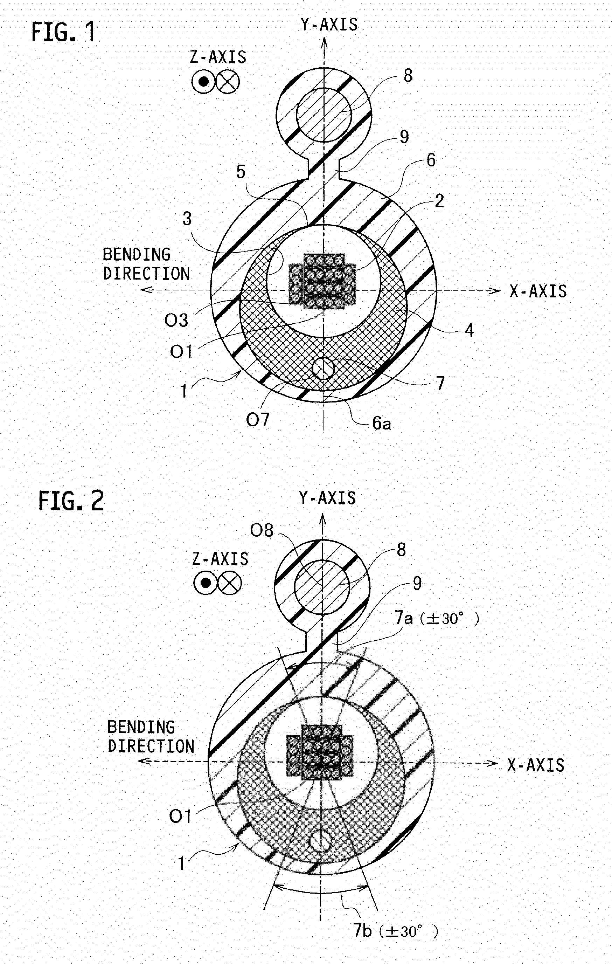

Fig. 1 is a cross-sectional view showing a configuration of an optical fiber cable according to an embodiment of the present invention.

As shown in Fig. 1, an optical fiber cable 1 according to the embodiment of the present invention includes: an optical fiber 2; a slotted core 4 which is provided with a rectilinear slotted groove 3 disposed along a longitudinal direction of the cable (a Z-axis direction in Fig. 1) and is configured to house and hold the optical fiber 1 inside the slotted groove 3; and a cylindrical sheath (covering) 6 which covers the entire slotted core 4 inclusive of an opening portion 5 of the slotted groove 3. In addition, the optical fiber cable 1 includes a rectilinear suspension wire 8 integrally provided along the sheath 6 in the longitudinal direction (the Z-axis direction) of the cable, and a rectilinear tension member 7 inserted in the slotted core 4 along the longitudinal direction of the cable.

As the optical fiber 2, an optical fiber strand, a buffered optical fiber, an optical fiber ribbon or the like is used. The optical fiber strand is formed by coating an optical fiber with ultraviolet curable resin. The buffered optical fiber is formed by coating the optical fiber with plastic resin, and it has a larger diameter than that of the optical fiber strand. The optical fiber ribbon is formed by arranging several optical fiber strands parallel and coating the strands with ultraviolet curable resin.

In the present embodiment, the optical fiber ribbon is used as the optical fiber 2, and the multiple (six) optical fiber ribbons are housed in the slotted groove 3. An interference material or an empty space may be provided between the optical fiber 2 and an inner wall of the slotted groove 3.

The slotted core 4 is a holding member (having a cylindrical outer periphery) configured to house and hold the optical fiber 2 in the slotted groove 3. The slotted core 4 includes the cylindrical slotted groove 3 having a center line 03 in a position displaced from a center line O1 of the optical fiber cable 1 (nevertheless, upper parts of the respective cylindrical shapes constituting the slotted core 4 and the slotted groove 3 are cut away in Fig. 1). The slotted core 4 is formed by extrusion molding which performs molding by feeding resin into a mold. A cross-sectional shape of the slotted core 4 perpendicular to the longitudinal direction is a C-shape. A thickness of the slotted core 4 is not uniform. Specifically, the thickness is increased gradually from a region where the opening portion 5 is formed toward a region opposite to the opening portion 5 (i.e. along the outer periphery of the slotted core 4). When viewed from the opposite side, the thickness of the slotted core 4 is decreased gradually from a region corresponding to a bottom portion of the slotted groove 3 toward the region where the opening portion 5 is formed.

In addition, the tension member (the tensile body) 7 is inserted (buried) in the slotted core 4. The tension member 7 suppresses deformation of the optical fiber cable 1 itself because of heat shrinkage of the sheath 6 due to an influence of heat or the like exposed in a place where the optical fiber cable 1 is installed. The tension member 7 is formed of a rectilinear wire rod having a circular cross-sectional shape such as a steel wire or FRP. The tension member 7 is disposed in the thickest region of the slotted core 4 (i.e., a region (a bottom portion in Fig. 1) on the opposite side of the cylindrical center of the slotted core 4 to a region (an upper portion in Fig. 1) where the opening portion 5 is formed).

The sheath 6 is formed as a cylindrical tube. The sheath 6 is formed by extrusion molding which covers the entire slotted core 4 housing the optical fiber 2 with polyethylene resin. When the sheath 6 is molded, the opening portion 5 of the slotted groove 3 is occluded by attaching a retention tape in order to prevent the polyethylene resin for the sheath from entering the slotted groove 3.

The sheath 6 formed has the maximum thickness in a region (an upper portion in Fig. 1) 6b facing the opening portion 5 of the slotted groove 3, and its thickness gradually decreases toward a bottom portion along the outer periphery of the slotted core 4, thereby the sheath 6 has the minimum thickness in a region (a bottommost portion) 6a adjacent to a bottommost portion of the slotted core 4 (where the tension member 7 is buried).

Moreover, the rectilinear suspension wire 8 disposed in the longitudinal direction of the cable is integrally provided to an outer peripheral surface of the sheath 6. The suspension wire 8 is formed of a rectilinear wire rod having a circular cross-sectional shape such as a steel wire or FRP. The suspension wire 8 is integrally provided to the outer peripheral surface of the sheath 6 by a linking portion 9 made of a similar synthetic resin material to that of the sheath 6. The linking portion 9 is integrally formed on the outer peripheral surface of the sheath 6, and the suspension wire 8 is inserted (buried) therein.

Fig. 2 is a cross-sectional view showing a position of the center of the tension member in the optical fiber cable according to the embodiment of the present invention.

In the optical fiber cable 1, as shown in Fig. 2, the tension member 7 is located in a region 7a or 7b having an angle about the cable center line within a predetermined value with respect to a plane (a Y-Z plane in Fig. 2) including a center line 08 of the suspension wire 8 and the cable center line O1. As will be described later, the predetermined value is preferably ±30° or more preferably ±20°. That is, the tension member 7 is located between two planes each including the cable center line O1 and being inclined with respect to the Y-Z plane. In other words, as shown in Fig. 1, in the optical fiber cable 1, a plane including the center line 08 of the suspension wire 8 and a center line 07 of the tension member 7 either includes the cable center line 01. Alternatively, the aforementioned plane is located in the vicinity of the cable center line O1. In the embodiment in Fig. 1, the cable center line O1 is located between the center line 08 of the suspension wire 8 and the center line 07 of the tension member 7. To put it more differently, the tension member 7 is provided on the opposite side of the cable center line O1 to the center line 08 of the suspension wire in the plane including the center line 08 of the suspension wire and the cable center line O1.

For this reason, the optical fiber cable 1 possesses flexibility in an orthogonal direction (an X-axis direction in Fig. 1) to the plane including the center line 08 of the suspension wire 8 and the center line 07 of the tension member 7. The optical fiber cable 1 can be bent in this direction without putting a load on the optical fiber 2, and thus it becomes possible to be wound around a drum while being bent in this direction. Moreover, the optical fiber cable 1 can also protect the optical fiber against an impact from the outside.

As shown in [Table 1] below, regarding a relation between the angle about the cable center line with respect of the Y-Z plane and the flexibility of the optical fiber cable 1, the position of the tension member 7 is set preferably within +30° or more preferably within ±20°.

**[Table 1]**

| | | | | | |
|---|---|---|---|---|---|
| Position of Tension Member (*) | 0° | 10° | 20° | 30° | 35° |
| Flexibility in X-axis Direction | Good | Good | Good | Good | Poor |

| | | | | | |
|---|---|---|---|---|---|
| * Angle with respect to Y-Z Plane | | | | | |

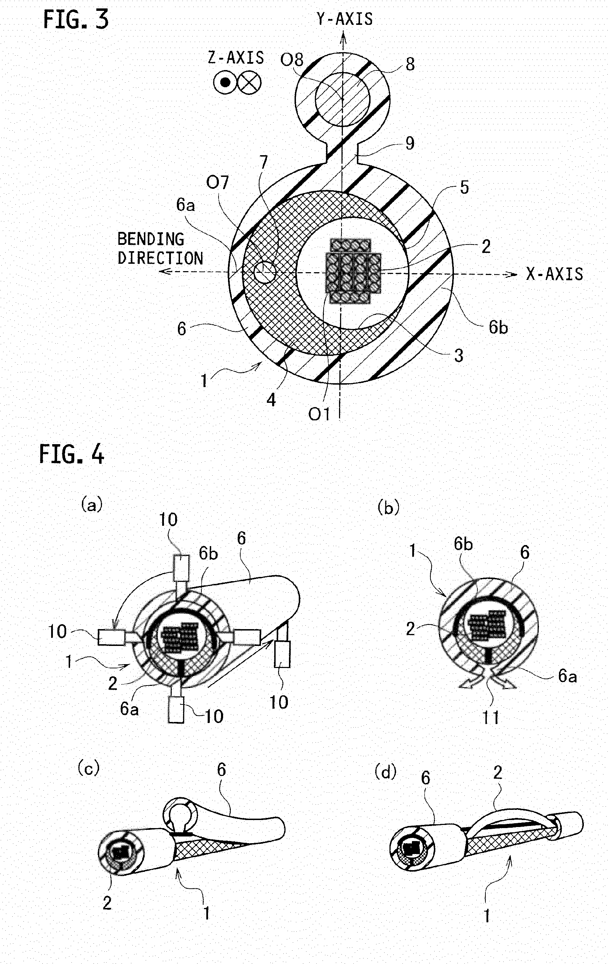

Fig. 3 is a cross-sectional view showing a configuration of the optical fiber cable in which the tension member is located in a region having an angle about the cable center line in excess of ±30° with respect to the Y-Z plane.

As shown in Fig. 3, in the case where the tension member 7 is located in the region having the angle about the cable center line in excess of ±30° with respect to the Y-Z plane, a tensile or compressive force is applied to the tension member 7 when the optical fiber cable 1 is bent, and thus sufficient flexibility cannot be achieved. In addition, the tension member 7 may be detached from the slotted core 4 when the optical fiber cable 1 is bent. Furthermore, since the optical fiber 2 is not located on the Y-Z plane, a tensile or compressive force may be applied to the optical fiber 2 and may cause cable disconnection or a transmission loss when the optical fiber cable 1 is bent.

Moreover, in this case, the opening portion 5 of the slotted groove 3 is located at a thin portion of the sheath 6. Accordingly, the optical fiber 2 may be damaged by an impact from the outside.

Referring to Fig. 1 again, in the optical fiber cable 1, the rectilinear thick portion 6b is formed on the sheath 6 along the longitudinal direction of the cable as described previously. It is preferable to continuously provide the suspension wire 8 to the sheath 6 at the thick portion 6b of the sheath 6. By continuously providing the suspension wire 8 to the sheath 6 at the thick portion 6b, it is easy to perform a mid-span access operation which is an operation to rip the sheath 6 and to extract the optical fiber 2 housed in the slotted groove 3 (as will be described later). The mid-span access operation is made by the following operations: cutting two positions in a predetermined region of the sheath 6 perpendicularly to the longitudinal direction of the cable and along a circumferential direction of the cable by using a cutting tool such as a knife; thereafter cleaving the sheath 6 by putting the knife into the sheath 6 along the longitudinal direction of the cable; removing the sheath 6; and taking out the optical fiber 2 from the slotted groove 3 of the slotted core 4.

Fig. 4 is a perspective view showing procedures of the mid-span access operation with the optical fiber cable according to the embodiment of the present invention.

Specifically, when the mid-span access operation is performed with the optical fiber cable 1, the suspension wire 8 is first removed by cutting the linking portion 9 away at a section to be accessed. Next, as shown in part (a) in Fig. 4, a cutting edge of the knife 10 serving as the cutting tool is put in a predetermined position on the sheath 6 in a perpendicular direction to the longitudinal direction of the cable so as to form a cut along the circumferential direction of the cable. Specifically, the sheath 6 is cut into rounds with the knife 10. The above-described operation (action) is performed in two predetermined positions along the longitudinal direction of the sheath 6. The depth to be cut with the knife 10 is set equivalent to a depth reaching from the outer peripheral surface of the sheath 6 to a surface of the slotted core 4. The sheath 6 is cut into rounds by turning the knife 10 along the circumferential direction of the cable while the cutting edge of the knife 10 is maintained in the position at this cutting depth. At this time, the suspension wire 8 is cut out as well.

When the sheath 6 is cut into rounds as described above, it is necessary to pay close attention not to damage the optical fiber 2 housed in the slotted groove 3 by allowing the knife 10 to enter the opening portion 5 of the slotted core 4. In the optical fiber cable 1, a portion of the sheath 6 corresponding to the opening portion 5 is thick and the linking portion 9 and the suspension wire 8 are provided at this portion. Accordingly, the knife 10 is prevented from entering deeper than the required level.

That is to say, the sheath 6 is thick at the portion 6b facing the opening portion 5 of the slotted core 4. Accordingly, the cutting edge of the knife 10 does not reach the slotted core 4. The thickened portion of the sheath 6 is not cut away with the knife 10 and is retained in a connected state. The rest of the sheath 6 is cut into rounds with the knife 10.

Next, the sheath 6 is cleaved (split lengthwise) by moving the knife 10 along the longitudinal direction of the optical fiber cable 1 as indicated with arrows A. At the time, the cutting edge of the knife 10 goes into the position reaching the surface of the slotted core 4. Here, the position to be cleaved with the knife 10 is preferably located on the opposite side 6a to the position where the linking portion 9 and the suspension wire 8 are provided. As shown in Fig. 1, the portion 6a is the thinnest portion 6a of the sheath so that the sheath 6 can be cleaved easily. Moreover, the optical fiber 2 is not damaged because this is the position where the tension member 7 is provided in the slotted core 4.

A cleavage 11 is formed on the sheath 6 as shown in part (b) of Fig. 4 by the sheath cleaving action as described above. Then, as shown in part (c) of Fig. 4, the cleavage 11 is spread and the sheath 6 is ripped in the two positions cut into rounds (the two predetermined positions along the longitudinal direction of the sheath 6). Thereafter, a fragment of the sheath 6 between the two positions is removed.

As the sheath 6 in the predetermined section is removed as described above, the optical fiber 2 can be taken out of the slotted groove 3 of the slotted core 4 in the section as shown in part (d) of Fig. 4.

Meanwhile, in the optical fiber cable 1, it is preferable to continuously provide the suspension wire 8 along and to the sheath 6 at the portion of the sheath 6 corresponding to the opening portion 5 of the slotted groove 3 also in the light of protecting the optical fiber 2 against an impact from the outside. The optical fiber 2 can be protected against an impact from the outside by continuously providing the suspension wire 8 to the thick portion 6b of the sheath corresponding to the opening portion 5 of the slotted groove 3.

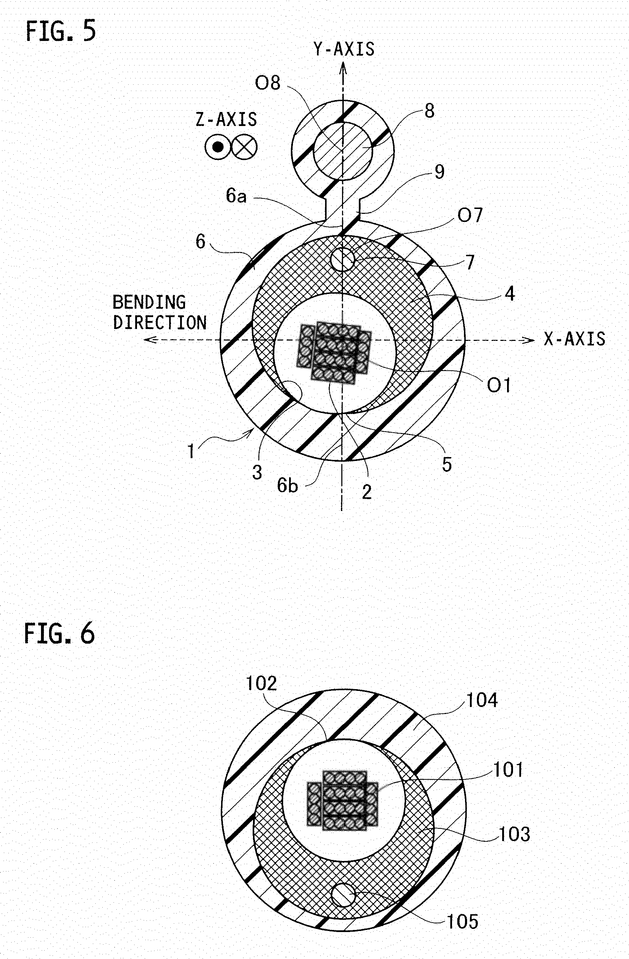

Fig. 5 is a cross-sectional view showing a configuration of the optical fiber cable in which the suspension wire is provided at a portion not corresponding to the opening portion of the slotted groove.

As shown in Fig. 5, when the suspension wire 8 is provided at the portion not corresponding to the opening portion 5 of the slotted groove 3, the optical fiber 2 may be damaged by an impact from the outside because the opening portion 5 of the slotted groove 3 is located at a portion where the sheath 6 is thin (a portion where the linking portion 9 is not formed).

In addition, in the case, the linking portion 9 is formed at the thinnest portion 6a of the sheath 6. Accordingly, it is difficult to cleave the sheath 6 lengthwise and the mid-span access operation is complicated.

Specifically, the following [Table 2] shows a summary of flexibility, operability of the mid-span access operation, and impact resistance of the optical fiber 2 in regard to the optical fiber cable 1 illustrated in Fig. 1, the optical fiber cable 1 illustrated in Fig. 3, and the optical fiber cable 1 illustrated in Fig. 5.

**[Table 2]**

| Configuration | Fig. 1 | Fig. 3 | Fig. 5 |
|---|---|---|---|
| Flexibility | Good | Poor | Good |
| Operability of Mid-Span Access Operation | Good | Good | Poor |
| Impact Resistance of Optical Fiber | Good | Poor | Poor |

### INDUSTRIAL APPLICABILITY

The present invention is applicable to an optical fiber cable configured to house an optical fiber in a slotted core and to cover the slotted core with a sheath.

## Claims

1. An optical fiber cable comprising:
an optical fiber;
a slotted core including a rectilinear slotted groove disposed along a longitudinal direction of the cable and being configured to house and hold the optical fiber in the slotted groove;
a cylindrical sheath configured to cover the entire slotted core inclusive of an opening portion of the slotted groove;
a rectilinear suspension wire integrally provided to the sheath along the longitudinal direction of the cable; and
a rectilinear tension member inserted in the slotted core along the longitudinal direction of the cable,
wherein the tension member is provided in a region having an angle about a cable center line within a predetermined value with respect to a plane including a center line of the suspension wire and the cable center line.

2. The optical fiber cable according to claim 1, wherein the predetermined value is ±30°.

3. The optical fiber cable according to claim 2, wherein the predetermined value is ±20°.

4. The optical fiber cable according to any one of claims 1 to 3, wherein
a rectilinear thick portion is formed in the sheath along the longitudinal direction of the cable, and
the suspension wire is provided continuously to the sheath at the thick portion.

5. The optical fiber cable according to any one of claims 1 to 4, wherein the suspension wire is provided continuously to the sheath at a portion of the sheath corresponding to the opening portion of the slotted groove.

6. The optical fiber cable according to any one of claims 1 to 5, wherein the tension member is provided on an opposite side of the cable center line to the center line of the suspension wire in the plane including the center line of the suspension wire and the cable center line.
